(19) Europäisches Patentamt
European Patent Office
Office européen des brevets

(11) **EP 2 081 141 A1**

(12) **EUROPEAN PATENT APPLICATION**
published in accordance with Art. 153(4) EPC

(43) Date of publication:
**22.07.2009 Bulletin 2009/30**

(51) Int Cl.:
*G06Q 30/00* (2006.01)   *G06F 17/30* (2006.01)
*G06Q 10/00* (2006.01)

(21) Application number: **07830927.5**

(22) Date of filing: **31.10.2007**

(86) International application number:
**PCT/JP2007/071193**

(87) International publication number:
**WO 2008/056578 (15.05.2008 Gazette 2008/20)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **08.11.2006 JP 2006302296**

(71) Applicant: **Cirius Technologies, Inc.**
**Tokyo 150-0013 (JP)**

(72) Inventor: **MIYAZAWA, Gen**
**Tokyo 1500013 (JP)**

(74) Representative: **Blood, Marlon et al**
**Fry Heath & Spence LLP**
**The Gables**
**Massetts Road**
**Horley, Surrey RH6 7DQ (GB)**

(54) **ADVERTISEMENT INFORMATION PROVIDING METHOD, ADVERTISEMENT INFORMATION PROVIDING SYSTEM AND ADVERTISEMENT INFORMATION PROVIDING PROGRAM**

(57)    There is provided a method of providing advertising information, a system for providing advertising information, and a program for providing advertising information that: enable users to be broadly provided with advertising information from the vicinity by utilizing location information without regard to place names; are useful for users; and can contribute to highly effective advertising for an advertiser.

This method of providing advertising information that provides advertising information 4a of an advertiser 24a to a mobile telephone terminal 2 comprises the steps of: acquiring a search keyword 8f that has been input through the mobile telephone terminal 2; extracting location information 22a from the search keyword 8f; extracting location information 22b that has been associated with location information 22a; extracting the advertising information 4a of the advertiser 24a located within a predetermined range while using the location corresponding to the location information 22b as a base point; and providing the extracted advertising information 4a to the mobile telephone terminal 2.

Figure 9

Start

| | |
|---|---|
| A search site page 8a is displayed on the display 2a of the mobile terminal 2. | (S. 1) |
| "Noodle shops, Dogenzaka, Shibuya-ku" is input into the search-keyword input pane 8b as the search keyword 8f. | (S. 2) |
| The search keyword 8f is transmitted to the search site server 8 via the Internet W. | (S. 3) |
| The search keyword 8f is transmitted from the search site server 8 to the advertising management server 4 via the Internet W. | (S. 4) |
| The predetermined-information-acquiring part 14a acquires the search keyword 8f. | (S. 5) |
| The place-name-information-extracting part 14b extracts "Dogenzaka, Shibuya-ku" as the place-name information 22a from the search keyword 8f. | (S. 6) |
| The location-information-extracting part 14c extracts "Latitude: 35,6582° north; Longitude: 139.6977° east" as the location information 22b from the place-name database 22. | (S. 7) |
| The advertising-category-information-extracting part 14d extracts "noodle shops" as the advertising-category information 24d from the search keyword 8f. | (S. 8) |
| The advertising-information-extracting part 14e extracts the advertising information 4a of an advertiser 24a located within a 100-meter radius from the location corresponding to the location information 22b. | (S. 9) |
| The advertising-information-extracting part 14e extracts the advertising information 4a associated with "noodle shops" as the advertising-category information 24d. | (S. 10) |
| The ranking-information-generating part 14f generates its ranking information H for each of the resultant extracted advertising information 4a. | (S. 11) |
| The advertising-information-providing part 14g transmits the resultant extracted advertising information 4a associated with its ranking information H to the search site server 8 via the Internet W. | (S. 12) |
| The search site server 8 transmits the advertising information 4a to the mobile telephone terminal 2 with the search results 8g. | (S. 13) |
| In the display 2a of the mobile telephone terminal 2, advertising information 4a is displayed with the search results 8g. | (S. 14) |

**Description**

[Technical Field]

The present invention relates to a method of providing advertising information to a communication terminal, a system for providing advertising information, and a program for providing advertising information, and particularly relates to a method of providing advertising information that enables the provision of useful and highly effective advertising to a communication terminal by utilizing location information, time information, and the like.

[Background Art]

Recently, wireless communication terminals have been widely used for use in wireless communications. Specifically, the use of mobile telephone terminals that function as telephones has become significantly widespread due to the convenience of easy incoming and outgoing calls regardless of location or time as well as sophisticated functions, reduced prices, and broadened call-enabled areas. In particular, mobile telephone terminals capable of transmitting/receiving information such as e-mails and configured with GPS (Global Positioning System) capable of transmitting/receiving location information have become the recent mainstream. Herein, a terminal refers to a terminal device.

As with personal computers (hereinafter referred to as "PCs"), most of the recent mobile telephone terminals have Internet access. These PCs and mobile telephone terminals with Internet access generally carry a Web browser, making it possible to access various Internet sites via the Internet.

For example, various information related to search keywords can also be obtained by accessing search sites that enable searches using keywords through a search engine and by entering search keywords. Furthermore, for example, daily news information can also be obtained by accessing news distribution sites run and managed by newspaper companies.

As described above, with the spread of access to Internet sites using communication terminals such as PCs and mobile telephone terminals, Internet sites have attracted attention and been widely used as new advertising media. For example, advertising panes are provided on parts of site pages of the search sites and news distribution sites described above and advertising information is posted within these panes, thereby enabling the advertising information to be viewed by many Internet users and resulting in highly effective advertising.

Recently, more effective advertising information has been selectively displayed for Internet site audiences (users) to generate highly effective advertising. For example, based on a keyword that has been entered into a search site, advertising information highly relevant to the keyword is displayed together with the search results (e.g., see Patent Literature 1-5). In this way, advertising information relevant to a keyword that a user is highly interested in is selectively displayed, and therefore the user will take a high interest in the advertising information as well. As a result, the displayed advertising information will contain advertising that is highly appealing and effective for the user.

In addition, with the use of location-tracking systems such as GPS, services for accurately determining the location of a mobile telephone terminal (or a user thereof) have been provided. For example, even when one is at an unknown location where it is difficult to understand the circumstances, these services make it possible to quickly understand the circumstances by acquiring information regarding one's own location using a mobile telephone terminal (e.g., see Patent Literature 6-8).

> Patent Literature 1: Japanese Unexamined Patent Application Publication No. 2003-196509
> Patent Literature 2: Published Japanese Translation of a PCT Application No. 2003-501729
> Patent Literature 3: Published Japanese Translation of a PCT Application No. 2005-533327
> Patent Literature 4: Published Japanese Translation of a PCT Application No. 2005-537591
> Patent Literature 5: Published Japanese Translation of a PCT Application No. 2006-500699
> Patent Literature 6: Japanese Unexamined Patent Application Publication No. 2001-306567
> Patent Literature 7: Japanese Unexamined Patent Application Publication No.2003-044552
> Patent Literature 8: Japanese Unexamined Patent Application Publication No.2004-310524

[Disclosure of the Invention]

[Problem to be Solved by the Invention]

However, advertising information containing highly effective advertising for users may not be provided even if a search keyword is entered into a search site. For example, when a specific regional name is input as a search keyword into a search site on which advertising panes have been established, advertising information regarding the specific region is provided but advertising information regarding areas adjacent to the region is not provided.

As an example, when a user enters "Dogenzaka, Shibuya-ku"/"noodle shops" as search keywords, advertising information regarding noodle shops located in Dogenzaka, Shibuya-ku is provided. However, advertising information regarding noodle shops located in "Shinsen-cho, Shibuya-ku", which is adjacent to "Dogenzaka, Shibuya-ku", is not provided.

In this case, it may be more useful for the user to obtain broad-ranging advertising information regarding noodle shops in "Dogenzaka, Shibuya-ku and the vicinity" without limiting the location to "Dogenzaka, Shibuya-ku". Therefore, information regarding noodle shops in "Shinsen-cho, Shibuya-ku", which is adjacent to "Dogenzaka, Shibuya-ku", may also be advertising information useful for the user. However, even when the search keywords "Dogenzaka, Shibuya-ku"/"noodle shops" are used, advertising information regarding noodle shops in "Shinsen-cho, Shibuya-ku" is not provided, thus failing to provide advertising information useful for the user.

Needless to say, when the keywords "Shinsen-cho, Shibuya-ku"/"noodle shops " are input, advertising information regarding noodle shops in Shinsen-cho, Shibuya-ku can be obtained, but this fails to provide advertising information regarding noodle shops in Dogenzaka, Shibuya-ku. If complicated search formulas such as '"Dogenzaka, Shibuya-ku' & 'noodle shops' or 'Shinsen-cho, Shibuya-ku' & 'noodle shops'" are created, advertising information regarding noodle shops in both Dogenzaka and Shinsen-cho can be obtained, but this is highly bothersome for users.

Furthermore, it is very convenient if advertising information regarding the vicinity of the location of the user is obtained. For example, if advertising information regarding noodle shops located in "Dogenzaka, Shibuya-ku" or "Shinsen-cho, Shibuya-ku" is obtained when a user enters "noodle shops" as a search keyword and is in an area near the boundary of "Dogenzaka, Shibuya-ku" and "Shinsen-cho, Shibuya-ku", not only is it very convenient and useful for users, but advertisers can easily obtain highly effective advertising.

The present invention has been made in view of the above situation and addresses the exemplary problems to provide a method of providing advertising information, a system for providing advertising information, and a program for providing advertising information that enable users to be provided with broad-ranging advertising information from the vicinity that is useful for users and can contribute to highly effective advertising for an advertiser by utilizing location information without regard to place names.

[Solution to the problem]

To solve the abovementioned problems, a method of providing advertising information according to an exemplary aspect of the present invention is a method of providing advertising information of an advertiser to a communication terminal, comprising the steps of: acquiring location information from the communication terminal; extracting the advertising information of the advertiser located within a predetermined range while using the location corresponding to the location information acquired from the communication terminal as a base point of the predetermined range; and providing the extracted advertising information to the communication terminal.

Advertising information of an advertiser located within a predetermined range is provided while using the location corresponding to the location information acquired from the communication terminal as a base point, thereby enabling the provision of a wide range of advertising information within the predetermined range from the base point. Therefore, operators (users) of the communication terminal can receive useful advertising information from the vicinity of the base point.

For example, when the communication terminal displays a map of the vicinity of a destination to allow a user to check the direction to the destination, information indicating a predetermined location (e.g., the center location) of the map may be regarded as location information. Using the location that corresponds to such location information as a base point to provide advertising information of an advertiser enables the provision of advertising information regarding the destination of the user (i.e., the vicinity of the location that the user is interested in). Advertising information regarding the vicinity of the location that the user is interested in tends to attract attention from the user and high advertising effectiveness can be expected. Furthermore, location information may be acquired from a map that displays the present location of the user (e.g., a map displayed on the screen of a car navigation system).

The step of acquiring location information may include the steps of: acquiring predetermined information that has been input through the communication terminal; extracting place-name information from the predetermined information; and extracting location information that has been associated with the place-name information.

Advertising information of an advertiser located within a predetermined range is provided while using the location associated with the place-name information as a base point, thereby enabling the provision of a wide range of advertising information within the predetermined range from the base point without regard to place names. Therefore, operators (users) of the communication terminal can receive useful advertising information regarding the vicinity of the base point without regard to place names.

For example, when predetermined information is a search keyword and the search keyword includes place-name information such as "Dogenzaka, Shibuya-ku", if the location is within a predetermined range from the base point, which is a location that has been associated with "Dogenzaka, Shibuya-ku", advertising information of an advertiser will be provided even if their address is in "Shinsen-cho, Shibuya-ku".

This method of providing advertising information may further include the steps of: extracting advertising-category information from the predetermined information; and extracting advertising information that has been associated with the extracted advertising-category information. By extracting advertising-category information and extracting advertising information that has been associated with the advertising-category information, even further useful advertising information can be provided to users. Examples of advertising category information may include information showing descriptions of shops or companies, such as restaurants, electronics stores, pet shops, discount stores, convenience stores, and the like.

The method may further comprise the step of extracting advertising information of the advertiser located within a predetermined range while using the location corresponding to the location information of the communication terminal as a base point, wherein the location information acquired from the communication terminal is the location information of the communication terminal.

In the event that place-name information is not included in the predetermined information, if location information is acquired from the communication terminal and advertising information is extracted and provided in accordance with the location information of the communication terminal, advertising information of an advertiser in the vicinity of the location of a user can be provided. Therefore, advertising information that is useful for users and that contains highly effective advertising for advertisers can be provided.

The predetermined range may be determined in accordance with administrative units. As the predetermined range is determined in accordance with administrative units, users can receive advertising information of an advertiser located within an administrative unit corresponding to their location information or an adjacent administrative unit. Therefore, when an advertiser is located in the same administrative unit as the administrative unit corresponding to the location information, users can also receive advertising information of an advertiser located away from the base point.

Furthermore, when the predetermined range is an adjacent administrative unit, and even when a user is on the boundary of administrative units, advertising information of advertisers located in both adjacent administrative units (i.e., advertising information useful for the user) can be provided.

In addition, administrative units are names indicating regions divided by administrative units. Examples include administrative units at the prefectural level, such as "Tokyo" and "Kanagawa", or more segmented administrative units at the municipal level, such as "Yokohama city" or "Shibuya-ku".

The method of providing advertising information further includes the step of generating ranking information in accordance with at least one of: distance from t location that corresponds to the location information acquired from the communication terminal to the location of the advertiser; an advertising rate that has been predetermined by each piece of the advertising information; or an expected click value indicating the probability that detailed information of the advertising information will be viewed through the communication terminal when the advertising information is provided to the communication terminal, wherein in the step of providing described above, the extracted advertising information may be associated with the ranking information and is provided to the communication terminal.

Advertising information is provided to the communication terminal by being associated with ranking information, thereby allowing image display and audio playback of the advertising information to be performed in order of priority in accordance with the ranking information. For example, by setting the ranking information with a high priority for advertising information of advertisers located close to the location corresponding to the location information that has been acquired from the communication terminal, advertising information useful for users can be provided with high priority.

In addition, by setting the ranking information with a high priority for advertising information for which high advertising rates have been set, advertising can be provided equitably for advertisers. By setting the ranking information with a high priority for advertising information with high expected click values, popular advertising information is provided with a high priority, thereby allowing advertising information more useful for users to be provided with a high priority.

The method may further comprise the step of calculating the ranking information according to the following formula.

$$H = k / (CPC \times CTR)$$

wherein

    H: ranking information
    k: coefficient
    CPC: advertising rate determined by each piece of advertising information, and
    CTR: expected click value of the advertising information.

By calculating the ranking information H in accordance with the product of the advertising rate CPC determined by each piece of advertising information and the expected click value CTR of the advertising information, popular advertising information with high advertising rates can be provided with a higher priority. Herein, smaller values for the ranking information H indicate a higher priority.

In addition, the method of providing advertising information further includes the step of generating ranking information in accordance with at least one of either of: distance from the location that corresponds to the location information of the communication terminal to the location of an advertiser; or time when the location information of the communication terminal is acquired, wherein in the step of providing described above, the extracted advertising information may be associated with the ranking information and is provided to the communication terminal.

Advertising information is provided to the communication terminal by being associated with ranking information, thereby allowing image display and audio playback of the advertising information to be performed in order of priority in accordance with the ranking information. For example, by setting ranking information with a high priority for advertising information of advertisers located close to the location corresponding to the location information of the communication terminal, advertising information more useful for users can be provided with a high priority.

Furthermore, when ranking information is generated in accordance with the time when the location information of the communication terminal was acquired, location information acquired later (i.e., recent location information) is given priority over location information acquired previously (i.e., old location information), and ranking information of advertisers within a predetermined range from a location corresponding to the recent location information is given priority over the ranking information of advertisers within a predetermined range from a location corresponding to the old location information, thereby allowing users to be provided with more useful advertising information with a high priority.

The method may further comprise the step of calculating the ranking information according to the following formula.

$$H = k \times T \times L$$

wherein

    H: ranking information,
    k: coefficient,
    T: time difference between the time when the location information of the communication terminal is acquired and the time when advertising information is provided to the communication terminal, and
    L: distance.

By calculating the ranking information H in accordance with the product of the time difference T and the distance L, advertising information of an advertiser located closer to a location corresponding to the more recent location information of the communication terminal can be provided with a higher priority. Herein, smaller values for the ranking information H indicate a higher priority.

The system of providing advertising information as according to an exemplary aspect of the present invention includes: a place-name database constructed by associating place-name information with location information that indicates a specific place corresponding to the place-name information; an advertising database constructed by associating advertising information with the location of an advertiser's whereabouts that corresponds to the advertising information; a predetermined

information-acquiring part that acquires predetermined information that has been input through the communication terminal; a place-name-extracting part that extracts the place-name information from the predetermined information; a location-information-extracting part that extracts from the place-name database the location information that has been associated with the place-name information; an advertising-information-extracting part that extracts from the advertising database the advertising information of the advertiser located within a predetermined range while using the location corresponding to the location information as a base point; and an advertising-information-providing part that provides the extracted advertising information to the communication terminal.

Advertising information of an advertiser located within a predetermined range is provided to the communication terminal while using the location associated with the place-name information as abase point, thereby allowing a wide range of advertising information within the predetermined range from the base point to be provided without regard to place names. Therefore, operators (users) of the communication terminal can receive useful advertising information from the vicinity of the base point without regard to place names.

For example, when predetermined information is a search keyword and the search keyword includes place-name information such as "Dogenzaka, Shibuya-ku", if the location is within a predetermined range from the base point, which is a location that has been associated with "Dogenzaka, Shibuya-ku", advertising information of an advertiser will be provided even if their address is in "Shinsen-cho, Shibuya-ku".

A program for providing advertising information according to still another exemplary aspects of the present invention causes a computer to function as: a predetermined-information-acquiring part that acquires predetermined information that has been input through the communication terminal; a place-name-extracting part that extracts place-name information from the predetermined information; a location-information-extracting part that extracts location information that has been associated with the place-name information; an advertising-information-extracting part that extracts said advertising information of an advertiser located within a predetermined range while using the location corresponding to the location information as a base point; and an advertising-information-providing part that provides the extracted advertising information to the communication terminal.

Advertising information of an advertiser located within a predetermined range is provided while using the location associated with the place-name information as a base point, thereby allowing a wide range of advertising information within the predetermined range from the base point to be provided without regard to place names. Therefore, operators (users) of the communication terminal can receive useful advertising information from the vicinity of the base point without regard to place names.

For example, when predetermined information is a search keyword and the search keyword includes place-name information such as "Dogenzaka, Shibuya-ku", if the location is within a predetermined range from the base point, which is a location that has been associated with "Dogenzaka, Shibuya-ku", advertising information of an advertiser will be provided even if their address is in "Shinsen-cho, Shibuya-ku".

Further problems solved and other features of the present invention will become apparent from the preferred embodiments described with reference to the following accompanying drawings.

[Effects of the Invention]

According to the present invention, a wide range of advertising information regarding the vicinity can be provided to users without regard to place names. Therefore, advertising information that is useful for users and that can achieve high advertising effectiveness for advertisers can be provided.

[Preferred embodiments of the Invention]

**Embodiment 1**

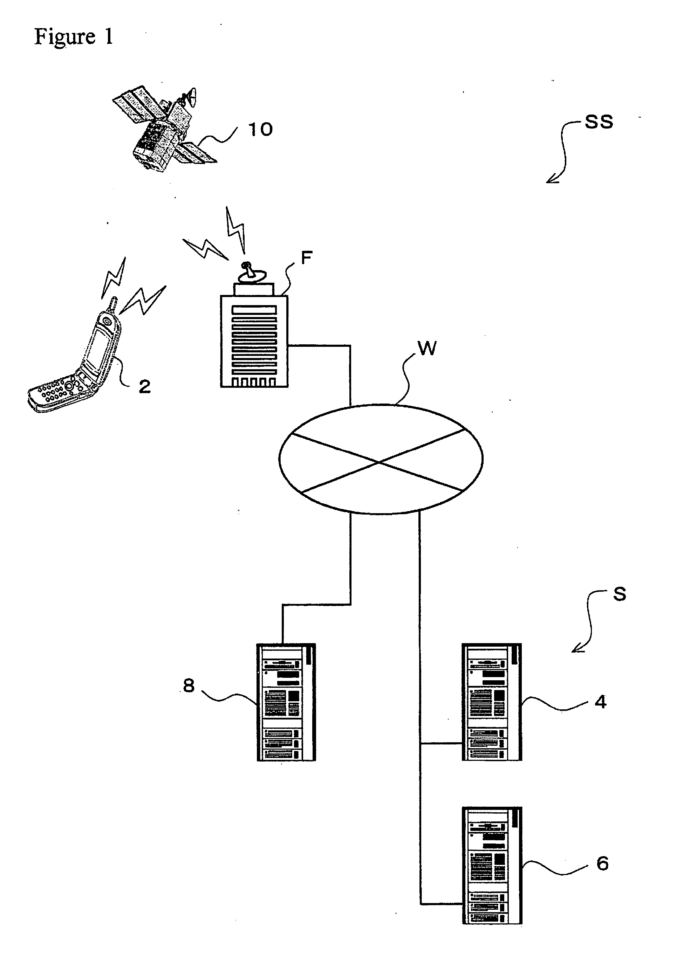

Embodiment 1 of the present invention will now be described with reference to the drawings. Fig. 1 is a schematic block diagram showing the overall constitution of an advertising system SS that includes a system for providing advertising information S, which implements the method of providing advertising information according to Embodiment 1 of the present invention. This advertising system SS includes the system for providing advertising information S, a base station F, a mobile telephone terminal (communication terminal) 2, a search site server 8, and the Internet W, and the system for providing advertising information S is configured with an advertising management server 4 and a database server 6.

The advertising management server 4 includes a predetermined-information-acquiring part, a place-name-extracting part, a location-information-extracting part, an advertising-category-information-extracting part, an advertising-information-extracting part, a ranking-information-generating part, and an advertising-information-providing part, and the database server 6 includes a location database and an advertising database, the details of which are described below. In Embodiment 1, the mobile telephone terminal 2 is described as an example of the communication terminal, but the communication terminal may be a different device so long as it is a terminal device capable of transmitting/receiving information to/from the advertising management server 4. For example, it may be a PC connected to the advertising management server 4 via the Internet W.

The base station F is used for wireless communications with the mobile telephone terminal 2. The base station F is configured to be connected to a telephone network (not shown) to implement a telephone call by the mobile telephone terminal 2 and to be connected to the Internet W so that Internet access using the mobile telephone terminal 2 is implemented. Therefore, it includes functions capable of receiving information transmitted from the mobile telephone terminal 2 to transmit it to the advertising management server 4 via the Internet W, as well as receiving information from the advertising management server 4 to transmit it to the mobile telephone terminal 2 via the Internet W. It also includes a function capable of receiving location information from the mobile telephone terminal 2 to transmit it to the advertising management server 4.

In the event that a PC is used as the communication terminal instead of the mobile telephone terminal 2, the advertising system SS does not need to comprise the base station F because the PC is directly connected to the Internet W.

The mobile telephone terminal 2 includes a function that enables telephone calls and Internet access and is configured to transmit/receive information to/from the advertising management server 4 and search site server 8, which have been connected to the Internet W through the base station F. Furthermore, it also includes a GPS (Global Positioning System) function that enables the acquisition of its own location information (terminal-location information) 2p using a GPS satellite 10. This terminal-location information 2p is transmitted from the mobile telephone terminal 2 to the base station F or transmitted directly from the GPS satellite 10 to the base station F.

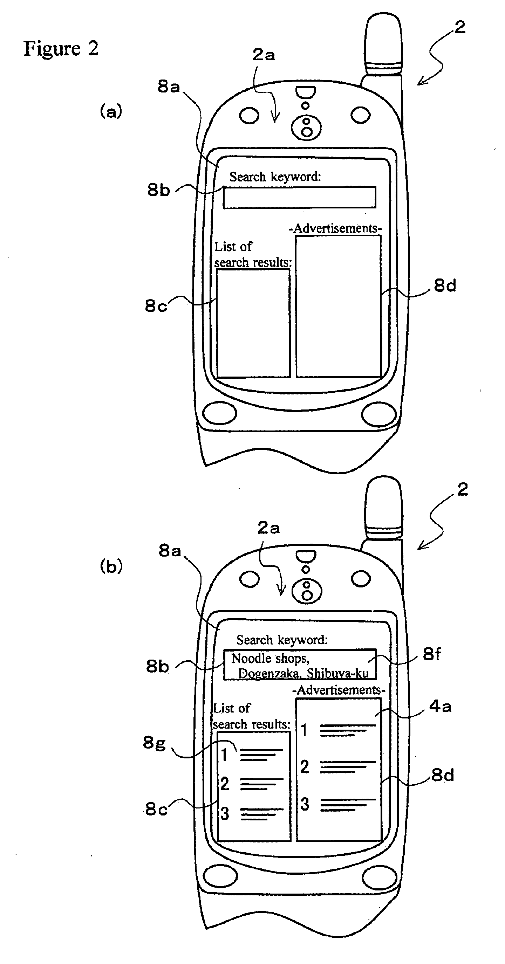

Fig. 2 (a) is an explanatory diagram illustrating a state in which search site page 8a of the search site server 8 is displayed on a display 2a of the mobile telephone terminal 2. Once connecting to the search site server 8 using the Internet access function, the search site page 8a will be displayed on the display 2a of the mobile telephone terminal 2. This search site page 8a is provided with a search-keyword input pane 8b, a search-results display pane 8c, and an advertising-information display pane 8d.

Once a search keyword (predetermined information) 8f is input into the search-keyword input pane 8b, the search keyword 8f is transmitted to the search site server 8 via the Internet W. Subsequently, information is retrieved in accordance with the search keyword 8f in the search site server 8 and the search results 8g are transmitted to the mobile telephone terminal 2.

Fig. 2 (b) is an explanatory diagram illustrating a state in which the search results 8g are displayed on the display 2a of the mobile telephone terminal 2. Once the search results 8g are transmitted to the mobile telephone terminal 2 from the search site server 8, the search results 8g are displayed on the search-results display pane 8c as shown in Fig. 2 (b). Simultaneously, advertising information 4a that has been extracted in accordance with the search keyword 8f is also displayed on the advertising-information display pane 8d.

The mobile telephone terminal 2 includes a function of determining its own location information (terminal-location information) 2p. For example, the function of determining location information may be one using the GPS satellite 10 for determination or may be one using information transmission/reception from among a plurality of the base stations F to determine location. In addition, it also includes a function of transmitting the determined terminal-location information 2p to the base station F. At the same time, information regarding the time (tm) when its terminal-location information 2p was determined is also transmitted to the base station F.

The search site server 8 is a server computer connected to the Internet W and provides search services using search engines. The search site server 8 includes a function that allows the display 2a of the mobile telephone terminal 2 that has accessed the server to display the search site page 8a, a function of searching for information in accordance with the search keyword 8f that has been input into the search-keyword input pane 8b on the search site page 8a, and a function of transmitting the search results 8g to the mobile telephone terminal 2. It also includes a function of transmitting the search keyword 8f that has been input into the search-keyword input pane 8b to the advertising management server 4 via the Internet W.

The advertising management server (computer) 4 is a server computer for providing advertising information to the mobile telephone terminal 2 via the Internet W and is connected to both the Internet W and the database server 6.

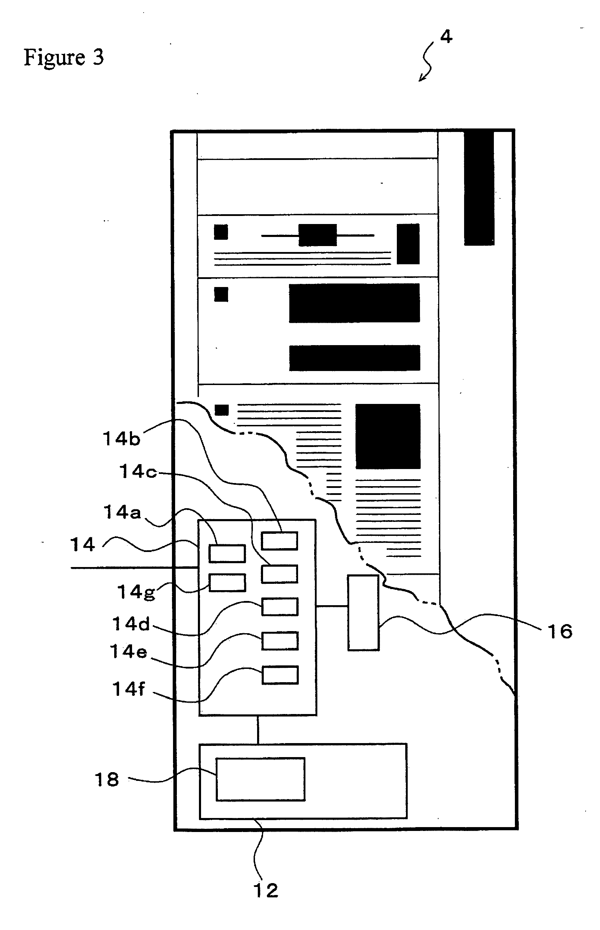

Fig. 3 is a block diagram illustrating an outline of the internal constitution of the advertising management server 4. The advertising management server 4 includes a storage device 12, a CPU 14 as a main part of the computer, and a main memory 16 in the inside thereof. The storage device 12 is, for example, a data storage means such as hard disks and contains a program for providing advertising information 18 in the inside thereof.

The program for providing advertising information 18 is a program for causing the advertising management server 4 or CPU 14 as the main part to function as the predetermined-information-acquiring part 14a, place-name-extracting part 14b, location-information-extracting part 14c, advertising-category-information-extracting part 14d, advertising-information-extracting part 14e, ranking-information-generating part 14f, and advertising-information-providing part 14g. Each function of the CPU 14 exercised by this program for providing advertising information 18 will be described below.

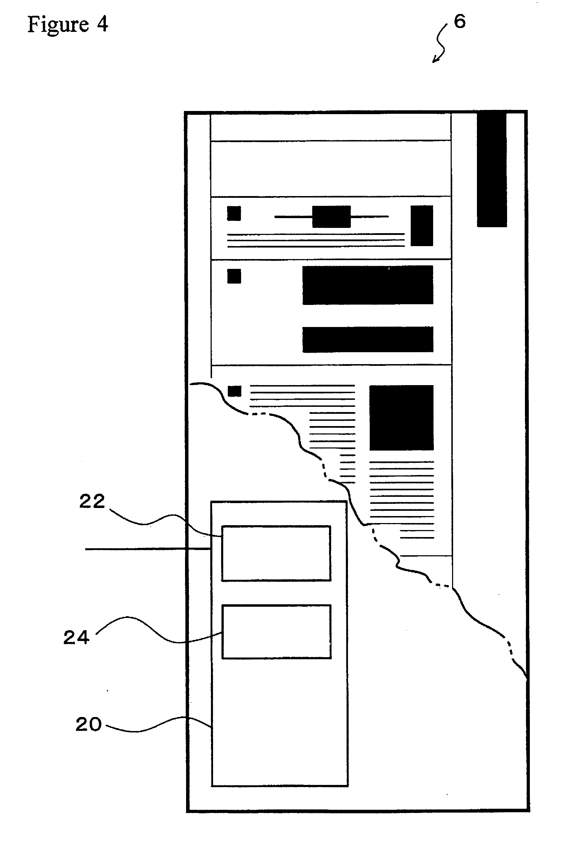

Fig. 4 is a block diagram illustrating an outline of the internal constitution of the database server 6. The database server 6 includes a storage device 20 in the inside thereof. The description of the constitution of the storage device 20 will be omitted because it is similar to that of the storage device 12. A place-name database 22 and an advertising database 24 are stored in the inside of the storage device 20. In Embodiment 1 of the present invention, the advertising management server 4 and database server 6 have been described as different servers, but of course, one server may comprise the functions of both the advertising management server 4 and database server 6.

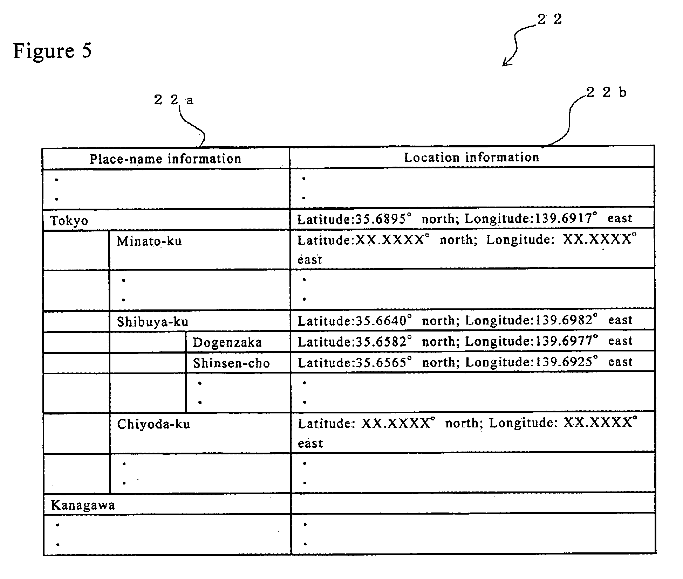

The place-name database 22 is a database configured by associating place-name information with location information that indicates a specific place corresponding to the place-name information. Fig. 5 is a structural diagram illustrating the data structure of the place-name database 22.

The place-name database 22 includes place-name information 22a as its internal data. The place-name information 22a is information equivalent to address representations such as "Tokyo" and "Minato-ku", but it may be information equivalent to landmarks such as "Tokyo Tower" and "Yokohama station". Location information 22b is associated with each piece of place-name information 22a. This location information 22b is information indicating a specific place corresponding to the place-name information 22a and is configured to include so-called GPS information comprising, for example, latitudinal and longitudinal information.

More specifically, the place-name information 22a for "Tokyo" is associated with 35.6895° north latitude (latitude: 35°41'22"N) and 139.6917° east longitude (longitude: 139°41'30"E), which is the GPS information for Tokyo Metropolitan Government, as the location information 22b. The place-name information 22a for "Shibuya-ku" is associated with 35.6640° north latitude and 139.6982° east longitude, which is the GPS information for the Shibuya Ward Office, as the location information 22b. Similarly, the place-name information 22a for "Dogenzaka" is associated with 35.6582° north latitude and 139.697° east longitude as the location information 22b that indicates a specific place in Dogenzaka, Shibuya-ku, and the place-name information 22a for "Shinsen-cho" is associated with 35.6565° north latitude and 139.6925° east longitude as the location information 22b that indicates a specific place in Shinsen-cho, Shibuya-ku.

As described above, in the place-name database 22, place-name information 22a equivalent to address representations or landmarks in Japan or other countries is associated with GPS information as location information 22b corresponding to its place-name information 22a.

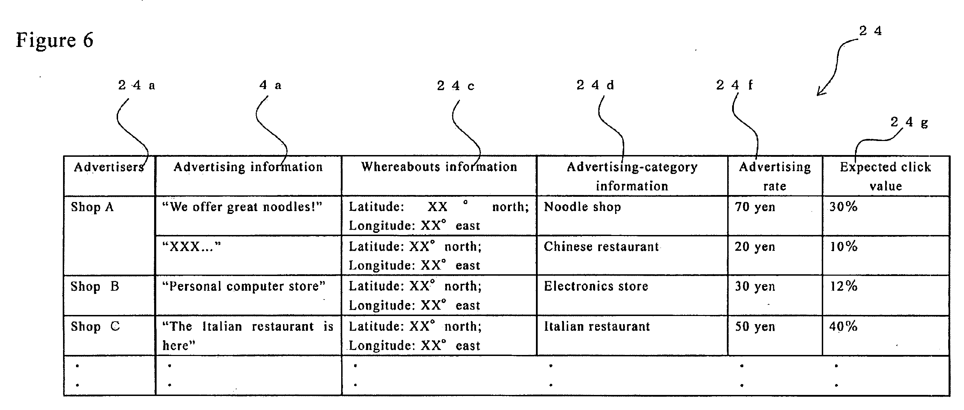

The advertising database 24 is a database configured by associating advertising information with information on an advertiser's whereabouts corresponding to the advertising information. In the advertising database 24, advertising-category information, advertising rates, and expected click values are also associated with the advertising information. Fig. 6 is a structural diagram illustrating the data structure of the advertising database 24.

The advertising database 24 contains the advertising information 4a as its internal data. The advertising information 4a is provided by an advertiser 24a to communication terminals such as the mobile telephone terminal 2 and PCs via the Internet W and is configured with, for example, phrases such as "We offer great noodles" as shown in Fig. 6.

Whereabouts information 24c is location information for identifying the location of the advertiser 24a providing the advertising information 4a and is configured with, for example, GPS information indicating the location of the advertiser 24a.

The advertising-category information 24d is classified information regarding the contents of advertising allocated for each piece of advertising information 4a. Examples of the advertising-category information 24d include "restaurants", "electronics stores", "pet shops", "discount stores", "convenience-stores", and the like. Furthermore, the advertising-category information 24d may include sub-classification information such as "Japanese restaurants", "noodle shops", and "Italian restaurants" under the larger classification information "restaurants".

The advertising rate 24f is the price of services committed to be paid by the advertiser 24a to a party who runs and manages the system for providing advertising information S, more specifically an advertising agent for the services for providing the advertising information 4a, and is predetermined by each piece of advertising information. In this advertising rate 24f, payment may be made every time the advertising information 4a is provided to a mobile telephone terminal 2, or payment may be made every time the advertising information 4a displayed on the display 2a of a mobile telephone terminal 2 is selected by a user and the detailed information is viewed.

The expected click value 24g is information indicating the probability that the detailed information will be viewed when the advertising information 4a is displayed on the display 2a of the mobile telephone terminal 2. More specifically, it is a rate calculated by the number of times a piece of advertising information 4a is selected to view detailed information by an interested user divided by the number of times the piece of advertising information 4a is provided, and it is correlated with the popularity and effectiveness of the advertising information 4a.

As described above, in the advertising database 24, the advertiser 24a, the advertising information 4a, the whereabouts information 24c of the advertiser, the advertising-category information 24d, the advertising rate 24f, and the expected click value 24g are associated with each other.

The CPU 14 is a main part of this advertising management server 4 and performs various arithmetic processes in cooperation with the storage device 12 and main memory 16. The CPU 14 fulfills the functions of the predetermined-information-acquiring part 14a, the place-name-extracting part 14b, the location-information-extracting part 14c, the advertising-category-information-extracting part 14d, the advertising-information-extracting part 14e, the ranking-information-generating part 14f, and the advertising-information-providing part 14g in accordance with instructions from the program for providing advertising information 18. It also fulfills the function of acquiring terminal-location information 2p transmitted from the mobile telephone terminal 2 or base station F and the time when the terminal-location information (the time when the terminal-location information was determined) tm was determined.

The predetermined-information-acquiring part 14a includes a function of acquiring the search keyword 8f as predetermined information that has been input through the mobile telephone terminal 2 from the search site server 8 via the Internet W. The predetermined-information-acquiring part 14a may be, of course, configured to directly acquire the search keyword 8f from the mobile telephone terminal 2 via the Internet W instead of from the search site server 8.

The place-name-extracting part 14b includes a function of extracting the place-name information 22a from the obtained search keyword 8f. For example, when the search keyword 8f is "noodle shops, Dogenzaka, Shibuya-ku", the phrase "Dogenzaka, Shibuya-ku" from this search keyword 8f is recognized and extracted as the place-name information 22a.

The location-information-extracting part 14c includes a function of extracting the location information 22b associated with the place-name information 22a from the place-name database 22 in accordance with the place-name information 22a extracted from the search keyword 8f. For example, when the extracted place-name information 22a is "Dogenzaka", the information "latitude: 35.6582° north; longitude: 139.6977° east" is extracted as the location information 22b associated with "Dogenzaka" from the place-name database 22.

The advertising-category-information-extracting part 14d includes a function of extracting the advertising-category information 24d from the search keyword 8f. For example, when the search keyword 8f is "noodle shops, Dogenzaka, Shibuya-ku", the phrase "noodle shops" from this search keyword 8f is recognized and extracted as the advertising-category information 24d.

The advertising-information-extracting part 14e includes a function of extracting from advertising database 24 the advertising information 4a of an advertiser 24a located within a predetermined range while using the location corresponding to the location information 22b as a base point. Herein, for example, the predetermined range means includes distances from the location corresponding to the location information 22b that are within a 100-meter radius or within a 500-meter radius.

For example, while the location corresponding to "latitude: 35.6582° north; longitude: 139.6977° east" extracted as the location information 22b that corresponds to the place-name information 22a for "Dogenzaka, Shibuya-ku" is used as a base point, an advertiser 24a with a whereabouts information 24c within a 100-meter radius from the point is selected, and the advertising information 4a of this advertiser 24a is extracted.

The advertising information 4a of the advertiser 24a within the predetermined range is extracted while using the location corresponding to the location information 22b as a base point, thereby extracting the advertising information 4a as long as it is within the predetermined range regardless of whether the address of the advertiser 24a is in "Dogenzaka, Shibuya-ku" or "Shinsen-cho, Shibuya-ku".

In Embodiment 1 of the present invention, the predetermined range of the advertising-information-extracting part 14e has been determined in accordance with the distance from the location corresponding to the location information 22b, but it is not limited to this configuration. For example, the predetermined range may be determined in accordance with administrative units. For example, the location information 22b in the place-name database 22 may be information indicating administrative units such as "Shibuya-ku", and the whereabouts information 24c in the advertising database 24 may also be information indicating administrative units.

According to this idea, the location-information-extracting part 14c extracts "Shibuya-ku" as the location information 22b from the place-name information 22a for "Dogenzaka, Shibuya-ku", and the advertising-information-extracting part 14e selects the advertiser 24a for which "Shibuya-ku" is included in the whereabouts information 24c, thus making it possible to extract the advertising information 4a of the advertiser 24a. In other words, the advertising information 4a of the advertiser 24a located within the same administrative unit can be extracted regardless of the distance from the location corresponding to the location information 22b.

In this case, information indicating administrative units as the location information 22b and whereabouts information 24c may be character information such as "Shibuya-ku" or may be code information (local government codes) such as "13113".

In addition, the predetermined range may be configured to include not only the same administrative unit but also different administrative units. For example, when "Shibuya-ku" is extracted as the location information 22b, "Minato-ku" and "Setagaya-ku", which are adjacent to "Shibuya-ku", may also be within the predetermined range to extract the advertising information 4a in which these administrative units are set as the whereabouts information 24c.

Furthermore, the predetermined range may be configured in accordance with a combination of the distance and administrative unit. For example, administrative units and GPS information are extracted from the place-name information 22a as the location information 22b, the location corresponding to the GPS information is set as a base point, and a range within a 500-meter radius from the point that is within "Shibuya-ku" can be the predetermined range.

The advertising-information-extracting part 14e extracts only advertising information 4a associated with the advertising-category information 24d for "noodle shops" from further extracted advertising information 4a. When the advertising-category information 24d does not have sub-classification information for "noodle shops", only advertising information 4a associated with "restaurants", which is its larger classification information, is extracted.

The ranking-information-generating part 14f includes a function of generating ranking information H for each piece of advertising information 4a that indicates the priority when extracted advertising information 4a is displayed on the display 2a of the mobile telephone terminal 2. The ranking information H is associated with each piece of advertising information 4a and is provided to the mobile telephone terminal 2 by the advertising-information-providing part 14g via the Internet W. Needless to say, the extracted advertising information 4a and ranking information H are associated with each other to be transmitted to the search site server 8 via the Internet W so that they can be provided together with the search results 8g from the search site server 8 to the mobile telephone terminal 2.

In accordance with the ranking information H, higher-priority advertising information 4a is given higher priority to be displayed by the mobile telephone terminal 2. Herein, "Higher priority" is a concept including "superiority", "larger display mode", "more emphasized display mode", "higher frequency", and "longer period of time".

The ranking information H is generated in accordance with at least any one of: the advertising rate 24f for each piece of advertising information 4a; the expected click value 24g for each piece of advertising information 4a; the distance Lp from the location corresponding to the location information 22b that has been associated with the place-name information 22a to the location of the advertiser 24a; the distance Lm from the location corresponding to the terminal-location information 2p of the mobile telephone terminal 2 to the location of the advertiser 24a; and the time difference T between the time when the terminal-location information is determined (tm) (the time at which the terminal-location information 2p is determined) and the time when the advertising information is provided (ta) (the time at which the advertising information 4a will be provided to the mobile telephone terminal 2). Methods of generating the ranking information will be described below.

## Methods of generating ranking information

For the descriptions of the methods for generating ranking information, the generation of ranking information H4, H5 of the advertising information 4a and advertising information 5a (not shown) is described. Herein, the advertising information 5a is associated with the advertiser 25a, the whereabouts information 25c, the advertising-category information 25d, the advertising rate 25f, and the expected click value 25g (none of which are shown).

## A method in accordance with advertising rates

This is a method for determining the priority in accordance with the highness or lowness of the advertising rates 24f, 25f of the advertising information 4a, 5a. For example, when the advertising rate 24f is higher than the advertising rate 25f, the ranking information H4, H5 is generated so that the priority of the ranking information H4 of the advertising information 4a becomes higher than the ranking information H5 of the advertising information 5a.

In this case, the ranking information H4, H5 may be generated so that the priority ratio is set depending on the price ratio of the advertising rate 24f of the advertising information 4a to the advertising rate 25f of the advertising information 5a. For example, when the advertising rate 24f is 70 yen and the advertising rate 25f is 30 yen, the ranking information H4, H5 will be generated so that the priority ratio of the advertising information 4a to the advertising information 5a is 7:3.

When the priority ratio is set to 7:3, for example, in 10 instances of provision of advertising information, the advertising information 4a is preferentially provided 7 times and the advertising information 5a is preferentially provided 3 times. Alternatively, for example, in 10 minutes of provision time of advertising information, the advertising information 4a is preferentially provided for 7 minutes and the advertising information 5a is preferentially provided for 3 minutes.

In each piece of advertising information 4a, 5a, the ranking information H4, H5 can also be generated by setting a plurality of different advertising rates depending on the distance Lp so that the priority is set in accordance with the plurality of advertising rates and distance Lp. For example, for the advertising rate 24f of the advertising information 4a, an advertising rate PO for when the distance from the location corresponding to the whereabouts information 24c of the advertiser 24a to the location corresponding to the location information 22b is Lp = 0 and an advertising rate P20 for when the distance Lp = 20 km are preset. Herein, the price value of the advertising rate P20 is preset to be smaller than that of the advertising rate PO.

In addition, for the advertising rate 25f of the advertising information 5a, an advertising rate P6 for when the distance is Lp = 0 and an advertising rate P26 for when the distance is Lp = 20 km are preset. The price value of the advertising rate P26 is preset to be smaller than that of the advertising rate P6.

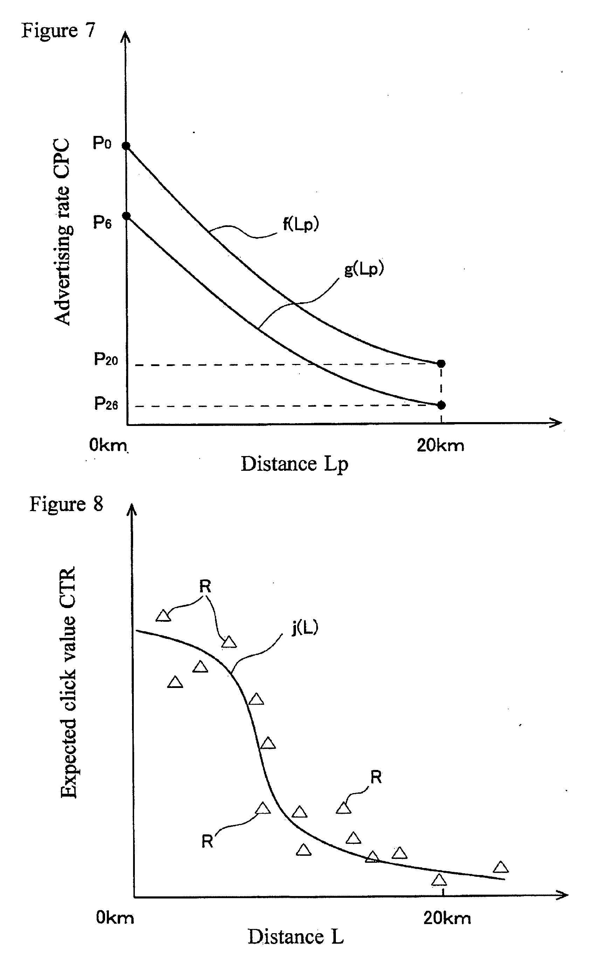

In general, the greater the distance Lp, the less effective the advertising becomes, and therefore the advertising rate CPC of the advertising information 4a is defined using a function f(Lp) and the advertising rate CPC of the advertising information 5a is defined using a function g(Lp) as shown in Fig. 7. Herein, for the advertising information 4a, the advertising rate CPC = PO when Lp = 0 and the advertising rate CPC = P20 when Lp = 20 km. For the advertising information 5a, the advertising rate CPC = P6 when Lp = 0, and the advertising rate CPC = P26 when Lp = 20 km. The ranking information H4, H5 is generated so that the priority of the advertising information 4a, 5a is set in accordance with these advertising rates CPC.

Through this configuration, the priority of advertising information can be set depending on the advertising rate, and the advertising information can be provided in a manner equitable for advertisers paying for advertising rates. Moreover, if it is configured so that an advertising rate varies depending on the distance Lp and the priority of advertising information is set depending on the advertising rate, charges of an advertising rate appropriate for the advertising effectiveness can be obtained along with provision of advertising information that is equitable for the advertising rate.

An example in which advertising rates CPC of each piece of advertising information 4a, 5a vary depending on the distance Lp has been described above, but it may be configured so that the advertising rates CPC of each piece of advertising information 4a, 5a vary depending on the distance Lm from the location corresponding to the whereabouts information 24c, 25c of the advertisers 24a, 25a to the location corresponding to the terminal-location information 2p of the mobile telephone terminal 2.

## A method in accordance with time difference

The time difference T is the difference (ta-tm) between the time when advertising information is provided (ta) and the time when terminal-location information is determined (tm). More specifically, it means that a smaller time difference T results in more recent terminal-location information (tm), and therefore the probability that the mobile telephone terminal 2 is located in the vicinity of the location corresponding to the terminal-location information 2p is higher.

On the other hand, a larger time difference T means that the time when the terminal-location information is determined (tm) is earlier (i.e., a further previous time), and the probability that the mobile telephone terminal 2 is located in the vicinity of the location corresponding to the terminal-location information 2p is lower.

The time difference T is calculated in accordance with the time when the terminal-location information is determined (tm) every time the advertising management server 4 acquires the terminal-location information 2p and the time when the terminal-location information is determined (tm) from the mobile telephone terminal 2 or base station F. Subsequently, both ranking information H4, H5 are generated so that the ranking information H4 of the advertising information 4a that has been extracted in accordance with terminal-location information 2p with a small time difference T is given a higher priority over the ranking information H5 of the advertising information 5a that has been extracted in accordance with terminal-location information 2p with a large time difference T.

Through this configuration, the priority for advertising information relevant to the later time with the smaller time difference T can be set higher than the priority for advertising information relevant to the earlier time with the larger time difference T, making it possible to preferentially provide advertising information that is more useful for users and contains highly effective advertising for advertisers.

**A method in accordance with distance**

The distance Lp refers to the distance from the location corresponding to the location information 22b that has been associated with the place-name information 22a to the location of the advertisers 24a, 25a (the locations that correspond to the whereabouts information 24c, 25c). Furthermore, the distance Lm refers to the distance from the location corresponding to the determined terminal-location information 2p to the locations of the advertisers 24a, 25a. Therefore, when the distances Lp, Lm for the advertiser 24a are smaller (closer) than the distances Lp, Lm for the advertiser 25a, the advertising information 4a will be more useful for users compared to the advertising information 5a.

Therefore, both ranking information H4, H5 are generated so that the ranking information H4 of the advertising information 24a of the advertiser 24a with the smaller distances Lp, Lm is given higher priority over the ranking information H5 of the advertising information 5a of the advertiser 25a with the larger distances Lp, Lm.

Herein, the ranking information H may be calculated with the following formula:

$$H = k \times T \times Lm$$

(wherein k is a coefficient).
This makes it possible to generate a smaller value of ranking information of its advertising information, the smaller the time difference T is, and the smaller the distance Lm is. In this case, the smaller the value of the ranking information H is, the higher the priority is set. Thereby, the priority of the advertising information 4a of the advertiser 24a that is relevant to the later determined time (tm) of the terminal-location information 2p and is located close to the location corresponding to the terminal-location information 2p can be set high. Therefore, advertising information that is more useful for users and contains highly effective advertising for advertisers can be preferentially provided.

In addition, herein, the ranking information H may be calculated with the following formula:

$$H = k \times (c1 \times T + c2 \times Lm)$$

(wherein k, c1, and c2 are coefficients),
wherein c1 is a time-difference-weighting coefficient and c2 is a distance-weighting coefficient, and setting the large time-difference-weighting coefficient c1 can increase the ratio of contribution to the ranking information by the time difference T and setting the large distance-weighting coefficient 2 can increase the ratio of contribution to the ranking information by the distance Lm.

**A method in accordance with expected click values**

The expected click values 24g, 25g are numerical values indicating the probability that the detailed information of the advertising information 4a, 5a will be viewed when the advertising information 4a, 5a is provided on the display 2a of the mobile telephone terminal 2. It will be understood that significantly high effectiveness of advertising will be achieved when the detailed information of the advertising information 4a, 5a is viewed compared to when only the advertising information 4a, 5a is provided on the display 2a.

Therefore, for example, by defining the expected click value 24g of the advertising information 4a as the expected probability that the detailed information of the advertising information 4a will be viewed and by estimating it in accordance with past probabilities of viewed detailed information of the advertising information 4a (i.e., the number of times that the detailed information of the advertising information 4a is viewed divided by the number of times that the advertising information 4a is provided on the display 2a), the validity of the advertising effectiveness of the advertising information 4a can be indicated.

For example, when the expected click value 24g of the advertising information 4a is 30% and the expected click value 25g of the advertising information 5a is 12%, ranking information H4, H5 are respectively generated so that the priority of the advertising information 4a is set higher than the priority of the advertising information 5a.

In addition, for example, it is also possible to further improve the ranking accuracy by further converting an expected click value CTR of certain advertising information into a function of the distance L, wherein the distance L may be either: the distance Lp between the location corresponding to the location information 22b that has been associated with the place-name information 22a if needed and the location of an advertiser; or the distance Lm between the location corresponding to the terminal-location information 2p and the location of an advertiser.

As shown in Fig. 8, the expected click value CTR, which includes a distance function, is a numerical value that changes in accordance with the distance L and can be expressed as j(L), which is a function of the distance L. In general, the expected click value CTR decreases as the distance L increases (becomes farther).

However, it is difficult to determine how much an expected click value CTR will decrease as the distance L increases due to other factors such as the popularity of the advertisers 24a, 25a and the appeal of the advertising information 4a, 5a. In addition, an expected click value CRT and the degree of its decrease may vary between each advertiser 24a, 25a. Therefore, an expected click value CTR in accordance with the distance L for each piece of the advertising information 4a, 5a is estimated by the ranking-information-generating part 14f.

This estimating calculation is performed in accordance with a learning calculation using a neural network. For example, when the advertising information 4a is provided on the display 2a of the mobile telephone terminal 2, the distance L at the time and information as to whether the detailed information of the advertising information 4a has been viewed are acquired so that data can be statistically accumulated.

This makes it possible to acquire an actual determined value for the expected click value 24g at the predetermined distance L of the advertising information 4a. The plurality of $\Delta$ in Fig. 8 indicates the distribution of actual determined values R of the probability of viewing the detailed information (expected click value 24g) at each distance L. In accordance with the statistical information of the actual determined value R, the expected click value CTR of the advertising information 4a at each distance L is estimated. Based this expected click value CTR, the ranking information H4 of the advertising information 4a is generated.

As described above, because the expected click value CTR is estimated in accordance with statistical information from the past, the accuracy of the estimation improves as the amount of accumulated statistical information increases, and the estimated value of the expected click value also changes due to changes in the statistical information.

The ranking information H (H4, H5) of the advertising information 4a, 5a may also be calculated in accordance with the following formula using this expected click value CTR and the abovementioned advertising rate CPC.

$$H = k2 \ / \ (CPC \times CTR)$$

(wherein k2 is a coefficient).

Herein, the smaller the value of ranking information H4, H5 that has been calculated for each piece of the advertising information 4a, 5a, the higher the priority that is set. Therefore, if the advertising range CPC, which changes depending on the distance L (Lp, Lm), is higher and the expected click value CTR is larger, the value of ranking information H of the advertising information becomes smaller and the priority is set to high. Thus, advertising information can be equitably provided and highly effective advertising for advertisers can be preferentially provided.

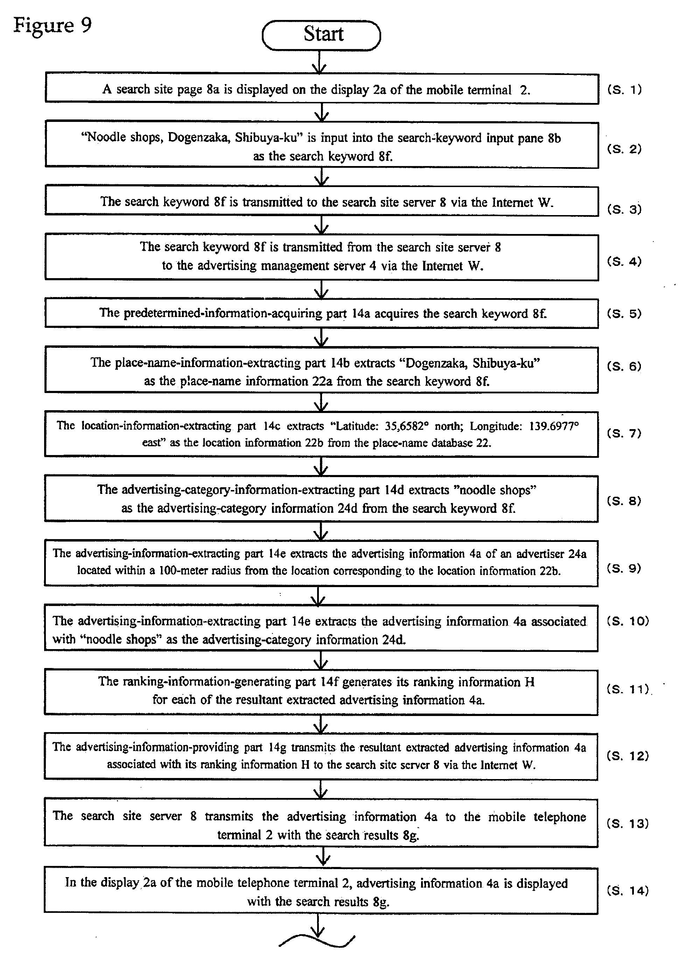

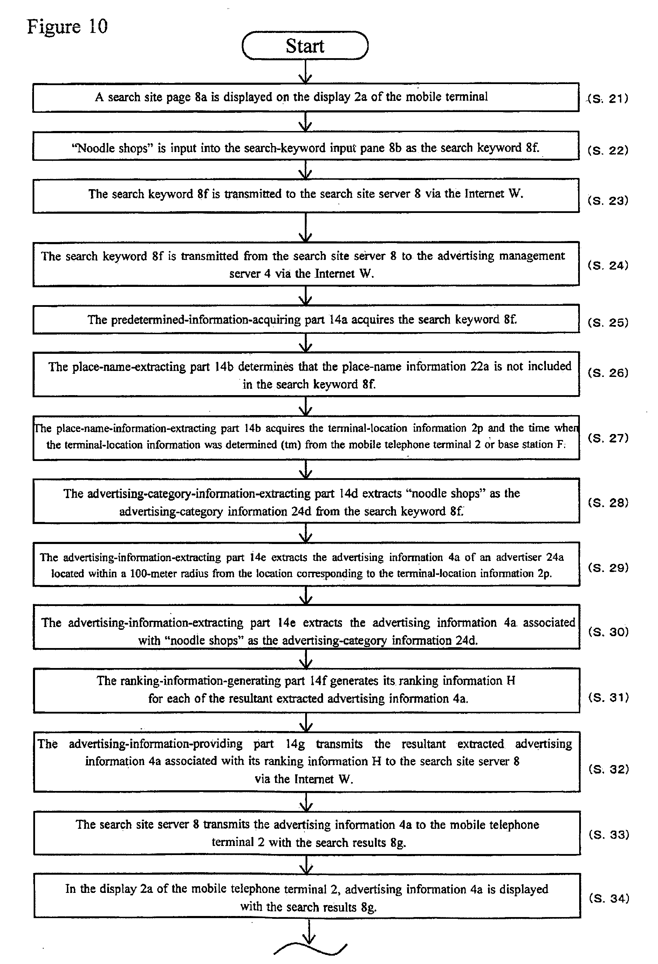

Next, a procedure for implementing the method of providing advertising information according to Embodiment 1 of the present invention will be described with reference to the flowcharts shown in Fig. 9 and Fig. 10. Fig. 9 describes a case when the place-name information 22a is included in the search keyword 8f and Fig. 10 describes a case when the place-name information 22a is not included in the search keyword 8f.

First, in Fig. 9, once a user accesses the search site server 8 from the mobile telephone terminal 2, a search site page 8a is displayed on the display 2a (S.1). When the user inputs "Noodle shops, Dogenzaka, Shibuya-ku" into the search-keyword input pane 8b on that search site page 8a as the search keyword 8f (S.2), the search keyword 8f is transmitted to the search site server 8 via the Internet W (S.3). Simultaneously, the search keyword 8f is transmitted from the search site server 8 to the advertising management server 4 via the Internet W (S.4).

In the advertising management server 4, the predetermined-information-acquiring part 14a acquires the search keyword 8f (S.5) while the place-name-extracting part14b extracts "Dogenzaka, Shibuya-ku" as the place-name information 22a from the search keyword 8f (S.6). Based on "Dogenzaka, Shibuya-ku" as the place-name information 22a, the location-information-extracting part 14c extracts from the place-name database 22 "latitude: 35,6582° north; longitude: 139.6977° east" as the location information 22b that has been associated with "Dogenzaka, Shibuya-ku" (S.7). Furthermore, the advertising-category-information-extracting part 14d extracts "noodle shops" from the search keyword 8f as the advertising-category information 24d (S.8).

The advertising-information-extracting part 14e extracts the advertising information 4a of an advertiser 24a located within a 100-meter radius from the location corresponding to the location information 22b in accordance with "latitude: 35,6582° north; longitude: 139.6977° east" as the location information 22b (S.9). Specifically, the distance between the location corresponding to the location information 22b and the location corresponding to the whereabouts information 24c are calculated in accordance with the whereabouts information 24c and location information 22b, which have been associated with each piece of advertising information 4a in the advertising database 24, and the advertising information 4a is extracted if the distance is within 100 meters.

Furthermore, the advertising-information-extracting part 14e extracts advertising information 4a that has been associated with advertising-category information 24d of "noodle shops" in accordance with "noodle shops" as the advertising-category information 24d that has been extracted from the search keyword 8f (S.10). Specifically, all advertising-category information that has been associated with each piece of advertising information within the advertising database 24 is examined, and of them only advertising information 4a in which the advertising-category information 24d is "noodle shops" is extracted.

Of course, the advertising-information-extracting part 14e need not examine all advertising-category information of advertising information in the advertising database 24 and may examine only advertising-category information of advertising information that has been extracted as information in which the distance is within 100 meters. In addition, advertising-category information that has been associated with advertising information in the advertising database 24 is not always consistent with advertising-category information that has been extracted from the search keyword 8f, and, for example, when there is a certain level of correlation such as "noodle shops" and "restaurants" or "PCs" and "electronics stores", relevant advertising information may be extracted.

The ranking-information-generating part 14f generates ranking information H for each of the resultant extracted advertising information 4a (i.e., advertising information 4a in which the advertising-category information 24d for "noodle shops" is selected from advertising information 4a of advertisers 24a located within 100 meters from the location corresponding to the location information 22b) (S.11). Ranking information is generated in accordance with at least any one of the advertising rate 24f, the expected click value 24g, and the distance Lp as described above.

The advertising-information-providing part 14g transmits the resultant extracted advertising information 4a associated with its ranking information H to the search site server 8 via the Internet W (S.12). The search site server 8 transmits the advertising information 4a that has been received from the advertising management server 4 to the mobile telephone terminal 2 together with the search results 8g of a search performed in accordance with the search keyword 8f (S.13).

In the display 2a of the mobile telephone terminal 2, while the search results 8g are displayed in the search-results display pane 8d of the search site 8a, the advertising information 4a is displayed in the advertising-information display pane 8d (S.14). At this time, the priorities of each piece of advertising information 4a are set in accordance with the ranking information H for each piece of advertising information 4a in the search site server 8 or in the mobile telephone terminal 2, and the advertising information 4a is displayed in accordance with the priorities.

Next, in Fig. 10, when a user accesses the search site server 8 from the mobile telephone terminal 2, the search site 8a is displayed on the display 2a (S. 21). When the user inputs "noodle shops" into the search-keyword input pane 8b of the search site page 8a as the search keyword 8f (S.22), the search keyword 8f is transmitted to the search site server 8 via the Internet W (S. 23). Simultaneously, the search keyword 8f is transmitted from the search site server 8 to the advertising management server 4 via the Internet W (S.24).

In the advertising management server 4, the predetermined-information-acquiring part 14a acquires the search keyword 8f (S.25). Subsequently, when the place-name information 22a is determined not to be included in the search keyword 8f (S.26), the place-name-extracting part 14b acquires from the mobile telephone terminal 2 or base station F the terminal-location information 2p that has been determined by the mobile telephone terminal 2 and GPS satellite 10 in advance along with the time when the terminal-location information is determined (tm) (the time at which the terminal-location information 2p will be determined) (S.27).

Furthermore, the advertising-category-information-extracting part 14d extracts "noodle shops" as the advertising-category information 24d from the search keyword 8f (S.28).

The advertising-information-extracting part 14e extracts the advertising information 4a of an advertiser 24a located within a 100-meter radius from the location corresponding to the terminal-location information 2p (S. 29). Specifically, the distance between the location corresponding to the terminal-location information 2p and the location corresponding to the whereabouts information 24c are calculated in accordance with the whereabouts information 24c and terminal-location information 2p, which have been associated with each piece of advertising information 4a in the advertising database 24, and the advertising information 4a is extracted if the distance is within 100 meters.

Furthermore, the advertising-information-extracting part 14e extracts the advertising information 4a that have been associated with the advertising-category information 24d of "noodle shops" in accordance with "noodle shops" as the advertising-category information 24dthat has been extracted from the search keyword 8f (S.30). Specifically, all advertising-category information that has been associated with each piece of advertising information in the advertising database 24 is examined, and of them only advertising information 4a in which the advertising-category information 24d is "noodle shops" is extracted.

Of course, the advertising-information-extracting part 14e need not examine all advertising-category information of advertising information in the advertising database 24 and may examine only advertising-category information of advertising information that has been extracted as information in which the distance is within 100 meters. In addition, advertising-category information that has been associated with advertising information in the advertising database 24 is not always consistent with advertising-category information that has been extracted from the search keyword 8f, and, for example, when there is a certain level of correlation such as "noodle shops" and "restaurants" or "PC" and "electronics stores", relevant advertising information may be extracted.

The ranking-information-generating part 14f generates its ranking information H for each of the resultant extracted advertising information 4a (i.e., advertising information 4a in which the advertising-category information 24d for "noodle shops" is selected from the advertising information 4a of an advertiser 24a located within 100 meters from the location corresponding to the terminal-location information 2p) (S.31). Ranking information is generated in accordance with at least any one of the advertising rate 24f, expected click value 24g, distance Lm, and time difference T as described above.

The advertising-information-providing part 14g transmits the resultant extracted advertising information 4a associated with its ranking information H to the search site server 8 via the Internet W (S.32). The search site server 8 transmits the advertising information 4a that has been received from the advertising management server 4 to the mobile telephone terminal 2 together with the search results 8g of the search performed in accordance with the search keyword 8f (S.33).

In the display 2a of the mobile telephone terminal 2, while the search results 8g are displayed in the search-results display pane 8c of the search site page 8a, the advertising information 4a is displayed in the advertising-information display pane 8d (S.34). At this time, the priorities of each piece of advertising information 4a are set in accordance with the ranking information H for each piece of advertising information 4a in the search site server 8 or in the mobile telephone terminal 2, and the advertising information 4a is displayed in accordance with the priorities.

In addition, when failing to extract the location information 22b because the place-name information 22a is not included in the search keyword 8f, , or when the advertiser 24a is not located within a predetermined range from the location corresponding to the location information 22b, it may be configured so that broad-ranging advertising information is provided to the mobile telephone terminal 2.

Broad-ranging advertising information is advertising information that is not selected in accordance with location information and includes, for example, advertising information of national chain stores and advertising information of various products and companies. In the event that the location information 22b is not extracted, a certain level of advertising effectiveness can be expected and advertising information can be useful for users if the advertising information is regarding national chain stores.

Therefore, the advertising-information display pane 8d on the display 2a can be fully and effectively utilized by providing broad-ranging advertising information to the mobile telephone terminal 2.

**Embodiment 2**

The method of providing advertising information according to Embodiment 2 of the present invention will be described with reference to the drawings. In addition, in Embodiment 2, the descriptions of configurations identical to those in Embodiment 1 will be omitted with the use of identical reference numerals.

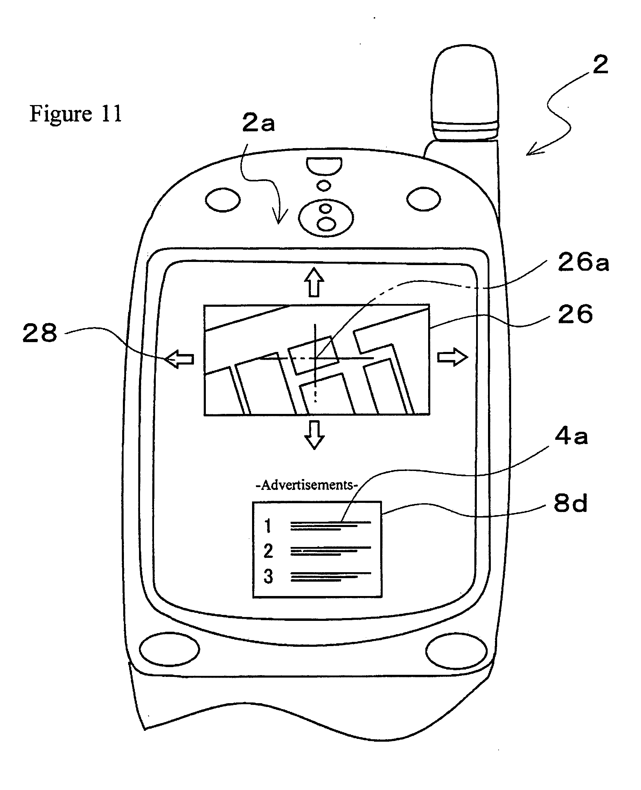

Fig. 11 is a diagram illustrating a state in which a map 26 is displayed on the display 2a of the mobile telephone terminal 2. In Embodiment 2 of the present invention, the map 26 is displayed on the display 2a through the operation of the user. As an example scenario of the user displaying the map 26 on the display 2a, the user displays a map of the vicinity of a restaurant on the display 2a to check the direction to the restaurant that the user plans to visit.

Therefore, the area displayed on the map 26 is an area displayed through the operation of the user, meaning that it can be an area that the user is interested in (area of interest).

The location-information-extracting part 14c extracts information for "Shibuya-ku" as the location information 22b of a center location 26a of the map 26 when the map 26 is displayed on the display 2a.

The advertising-information-extracting part 14e includes a function of extracting the advertising information 4a of an advertiser 24a located within a predetermined range from the advertising database 24 while using the location corresponding to "Shibuya-ku", which has been extracted as the location information 22b, as a base point. Herein, the predetermined range of Embodiment 2 is one in which the range is within the same administrative unit as the location corresponding to the location information 22b.

In other words, the location (administrative unit) corresponding to "latitude: 35.6582° north; longitude: 139.6977° east" that has been extracted as the location information 22b is "Shibuya-ku", and the advertising information 4a of an advertiser 24a in which the same administrative unit of "Shibuya-ku" is regarded as the whereabouts information 24c and is extracted from the advertising database 24. In addition, the administrative unit that defines the predetermined range may be a prefectural unit (e.g., "Tokyo").

The ranking-information-generating part 14f generates the ranking information H for each piece of advertising information 4a, indicating the priority when the extracted advertising information 4a is displayed on the display 2a of the mobile telephone terminal 2, but the method of generation is the same as that described in Embodiment 1 and the description will be omitted.

Also, as in Embodiment 1, higher-priority advertising information 4a is displayed in a higher order of priority in the mobile telephone terminal 2 in accordance with the generated ranking information H.

When a user selects an arrow 28 displayed around the map 26, the area displayed on the map 26 moves in the direction of the arrow to display a new area on the map 26. The location-information-extracting part 14c extracts again the location information 22b of the center location 26a of the map 26 that has been newly displayed.

Therefore, even if a user is interested in a different area from the map 26 that has been originally displayed and the different area is displayed, advertising information 4a in accordance with the location information 22b of the new area of interest can still be extracted and displayed on the display 2a.

The preferred embodiments of the present invention have been described above, but the present invention is not limited to these embodiments and various variations and modifications can be made within the scope of the invention.

[Brief Description of the Drawings]

Fig. 1 is a schematic block diagram illustrating the overall constitution of an advertising system that includes the system for providing advertising information that implements the method of providing advertising information, according to Embodiment 1 of the present invention.

Fig. 2 is an explanatory diagram illustrating a state in which the search site page is displayed on the display of the mobile telephone terminal shown in Fig. 1., wherein (a) shows a state before the search keyword is input and (b) shows a state in which the search results and advertising information are displayed.

Fig. 3 is a block diagram illustrating an outline of the internal constitution of the advertising management server shown in Fig. 1.

Fig. 4 is a block diagram illustrating an outline of the internal constitution of the database server shown in Fig. 1.

Fig. 5 is a structural diagram illustrating the data structure of the place-name database in the database shown in Fig. 4.

Fig. 6 is a structural diagram illustrating the data structure of the advertising database in the database shown in Fig. 4.

Fig. 7 is a graph showing the correlation between the advertising rate CPC and distance L.

Fig. 8 is a graph showing the correlation between the expected click value CTR and distance L.

Fig. 9is a flowchart describing the procedure for implementing the method of providing advertising information according to Embodiment 1 of the present invention and showing a case in which place-name information is included in the search keyword.

Fig. 10 is a flowchart describing the procedure for implementing the method of providing advertising information according to Embodiment 1 of the present invention and showing a case in which place-name information is not included in the search keyword.

Fig. 11 is a diagram showing a state in which a map is displayed on the display of the mobile telephone terminal in the method of providing advertising information according to Embodiment 2 of the present invention.

Explanation of the Symbols

c1: time-difference-weighting coefficient
c2: distance-weighting coefficient
F: base station
f(Lp), 9(Lp), j (L): functions
H, H4, H5: ranking information
k, k2: coefficients
L, Lp, Lm: distances
R: actual determined value
S: system for providing advertising information
SS: advertising system
T: time difference
ta: time when advertising information is provided
tm: time when terminal-location information is determined
W: Internet
2: mobile telephone terminal (communication terminal)
2a: display
2p: terminal-location information
4: advertising management server (computer)
4a, 5a: advertising information
6: database server
8: search site server
8a: search site page
8b: search-keyword input pane
8c: search-results display pane
8d: advertising-information display pane
8f: search keyword (predetermined information)
8g: search results
10: GPS satellite
12, 20: storage devices
14: CPU (main part of a computer)
14a: predetermined-information-acquiring part
14b: place-name-extracting part
14c: location-information-extracting part
14d: advertising-category-information-extracting part
14e: advertising-information-extracting part
14f: ranking-information-generating part
14g: advertising-information-providing part
16: main memory
18: program for providing advertising information
22: place-name database
22a: place-name information
22b: location information
24: advertising database
24a, 25a: advertisers
24c, 25c: whereabouts information
24d, 25d: advertising-category information
24f, 25f, p0, p6, p20, p26, CPC: advertising rates
24g, 25g, CTR: expected click values
26: map
26a: center location
28: arrow

## Claims

1. A method of providing advertising information of an advertiser to a communication terminal, comprising the steps of:

   acquiring location information from said communication terminal,
   extracting said advertising information of the advertiser located within a predetermined range while using the location corresponding to the location information acquired from the communication terminal as a base point of said predetermined range; and
   providing the extracted advertising information to said communication terminal.

2. A method of providing advertising information according to Claim 1, wherein said step of acquiring of location information comprises the steps of:

   acquiring predetermined information that has been input through said communication terminal,
   extracting place-name information from the predetermined information; and
   extracting location information associated with the place-name information.

3. A method of providing advertising information according to Claim 2, further comprising the steps of:

   extracting advertising-category information from said predetermined information, and
   extracting advertising information associated with the extracted advertising-category information.

4. A method of providing advertising information according to Claim 1, further comprising the step of extracting advertising information of said advertiser located within a predetermined range while using the location corresponding to the location information of the communication terminal as a base point of said predetermined range,
   wherein the location information that has been acquired from said communication terminal is the location information of said communication terminal.

5. A method of providing advertising information according to Claim 1, wherein said predetermined range is determined in accordance with administrative units.

6. A method of providing advertising information according to Claim 1, further comprising the step of generating ranking information in accordance with at least one of the following:

distance from the location that corresponds to the location information acquired from said communication terminal to the location of said advertiser;
an advertising rate that has been predetermined by each piece of said advertising information; or
an expected click value indicating the probability that detailed information of the advertising information will be viewed through the communication terminal when said advertising information is provided to said communication terminal,
wherein, in said providing step, said extracted advertising information is associated with said ranking information and is provided to said communication terminal.

7. A method of providing advertising information according to Claim 6, further comprising the step of calculating said ranking information in accordance with the following formula:

$$H = k \,/\, (CPC \times CTR)$$

wherein

H: ranking information,
k: coefficient,
CPC: advertising rate determined by each piece of advertising information, and
CTR: expected click value for advertising information.

8. A method of providing advertising information according to Claim 4, further comprising the step of generating ranking information in accordance with at least one of either:

distance from the location that corresponds to the location information of said communication terminal to the location of said advertiser; or
time when the location information of said communication terminal is acquired,
wherein, in said providing step, said extracted advertising information is associated with said ranking information and is provided to said communication terminal.

9. A method of providing advertising information according to Claim 8, further comprising the step of calculating said ranking information in accordance with the following formula:

$$H = k \times T \times L$$

wherein

H: ranking information,
k: coefficient,
T: time difference between the time when the location information of the communication terminal is acquired and the time when the advertising information is provided to the communication terminal, and
L: distance.

10. A system for providing advertising information comprising:

a place-name database constructed by associating place-name information with location information that indicates a specific place corresponding to the place-name information,
an advertising database constructed by associating advertising information with location of an advertiser that corresponds to the advertising information,
a predetermined-information-acquiring part that acquires predetermined information that has been input through a communication terminal,
a place-name-extracting part that extracts said place-name information from the predetermined information,
a location-information-extracting part that extracts from said place-name database said location information that has been associated with said place-name information,
an advertising-information-extracting part that extracts from the advertising database said advertising information of the advertiser located within a predetermined range while using the location corresponding to the location information as a base point of the predetermined range; and
an advertising-information-providing part that provides the extracted advertising information to said communication terminal.

11. A program for providing advertising information causing a computer to function as:

a predetermined-information-acquiring part that acquires predetermined information that has been input through a communication terminal,
a place-name-extracting part that extracts place-name information from the predetermined information,
a location-information-extracting part that extracts location information that has been associated with the place-name information,
an advertising-information-extracting part that extracts advertising information of the advertiser located within a predetermined range while using the location corresponding to the location information as a base point of the predetermined range; and
an advertising-information-providing part that provides the extracted advertising information to said communication terminal.

Figure 1

Figure 2

(a)

Search keyword:

-Advertisements-

List of
search results:

8a
8b
8c
8d
2a
2

(b)

Search keyword:

Noodle shops,
Dogenzaka, Shibuya-ku

-Advertisements-

List of
search results:

1
2
3

1
2
3

8a
8b
8g
8c
8f
4a
8d
2a
2

Figure 3

4

14b

14c

14a

14

14g

14d

14e

14f

16

18

12

Figure 4

Figure 5

22

22a

22b

| Place-name information | | | Location information |
|---|---|---|---|
| . . | | | . . |
| Tokyo | | | Latitude:35.6895° north; Longitude:139.6917° east |
| | Minato-ku | | Latitude:XX.XXXX° north; Longitude: XX.XXXX° east |
| | . . | | . . |
| | Shibuya-ku | | Latitude:35.6640° north; Longitude:139.6982° east |
| | | Dogenzaka | Latitude:35.6582° north; Longitude:139.6977° east |
| | | Shinsen-cho | Latitude:35.6565° north; Longitude:139.6925° east |
| | | . . | . . |
| | Chiyoda-ku | | Latitude: XX.XXXX° north; Longitude: XX.XXXX° east |
| | . . | | . . |
| Kanagawa | | | |
| . . | | | . . |

Figure 6

<table>
<tr><td></td><td>24 a</td><td>4 a</td><td>24 c</td><td>24 d</td><td>24 f</td><td>24 / 24 g</td></tr>
</table>

| Advertisers | Advertising information | Whereabouts information | Advertising-category information | Advertising rate | Expected click value |
|---|---|---|---|---|---|
| Shop A | "We offer great noodles!" | Latitude: XX ° north; Longitude: XX° east | Noodle shop | 70 yen | 30% |
| | "XXX..." | Latitude: XX° north; Longitude: XX° east | Chinese restaurant | 20 yen | 10% |
| Shop B | "Personal computer store" | Latitude: XX° north; Longitude: XX° east | Electronics store | 30 yen | 12% |
| Shop C | "The Italian restaurant is here" | Latitude: XX° north; Longitude: XX° east | Italian restaurant | 50 yen | 40% |
| ⋮ | ⋮ | ⋮ | ⋮ | ⋮ | ⋮ |

EP 2 081 141 A1

Figure 7

Figure 8

Figure 9

$$\boxed{\text{Start}}$$

| A search site page 8a is displayed on the display 2a of the mobile terminal 2. | (S. 1) |

"Noodle shops, Dogenzaka, Shibuya-ku" is input into the search-keyword input pane 8b as the search keyword 8f. (S. 2)

The search keyword 8f is transmitted to the search site server 8 via the Internet W. (S. 3)

The search keyword 8f is transmitted from the search site server 8 to the advertising management server 4 via the Internet W. (S. 4)

The predetermined-information-acquiring part 14a acquires the search keyword 8f. (S. 5)

The place-name-information-extracting part 14b extracts "Dogenzaka, Shibuya-ku" as the place-name information 22a from the search keyword 8f. (S. 6)

The location-information-extracting part 14c extracts "Latitude: 35,6582° north; Longitude: 139.6977° east" as the location information 22b from the place-name database 22. (S. 7)

The advertising-category-information-extracting part 14d extracts "noodle shops" as the advertising-category information 24d from the search keyword 8f. (S. 8)

The advertising-information-extracting part 14e extracts the advertising information 4a of an advertiser 24a located within a 100-meter radius from the location corresponding to the location information 22b. (S. 9)

The advertising-information-extracting part 14e extracts the advertising information 4a associated with "noodle shops" as the advertising-category information 24d. (S. 10)

The ranking-information-generating part 14f generates its ranking information H for each of the resultant extracted advertising information 4a. (S. 11)

The advertising-information-providing part 14g transmits the resultant extracted advertising information 4a associated with its ranking information H to the search site server 8 via the Internet W. (S. 12)

The search site server 8 transmits the advertising information 4a to the mobile telephone terminal 2 with the search results 8g. (S. 13)

In the display 2a of the mobile telephone terminal 2, advertising information 4a is displayed with the search results 8g. (S. 14)

## Figure 10

```
                        ( Start )
```

| | |
|---|---|
| A search site page 8a is displayed on the display 2a of the mobile terminal | (S. 21) |
| "Noodle shops" is input into the search-keyword input pane 8b as the search keyword 8f. | (S. 22) |
| The search keyword 8f is transmitted to the search site server 8 via the Internet W. | (S. 23) |
| The search keyword 8f is transmitted from the search site server 8 to the advertising management server 4 via the Internet W. | (S. 24) |
| The predetermined-information-acquiring part 14a acquires the search keyword 8f. | (S. 25) |
| The place-name-extracting part 14b determines that the place-name information 22a is not included in the search keyword 8f. | (S. 26) |
| The place-name-information-extracting part 14b acquires the terminal-location information 2p and the time when the terminal-location information was determined (tm) from the mobile telephone terminal 2 or base station F. | (S. 27) |
| The advertising-category-information-extracting part 14d extracts "noodle shops" as the advertising-category information 24d from the search keyword 8f. | (S. 28) |
| The advertising-information-extracting part 14e extracts the advertising information 4a of an advertiser 24a located within a 100-meter radius from the location corresponding to the terminal-location information 2p. | (S. 29) |
| The advertising-information-extracting part 14e extracts the advertising information 4a associated with "noodle shops" as the advertising-category information 24d. | (S. 30) |
| The ranking-information-generating part 14f generates its ranking information H for each of the resultant extracted advertising information 4a. | (S. 31) |
| The advertising-information-providing part 14g transmits the resultant extracted advertising information 4a associated with its ranking information H to the search site server 8 via the Internet W. | (S. 32) |
| The search site server 8 transmits the advertising information 4a to the mobile telephone terminal 2 with the search results 8g. | (S. 33) |
| In the display 2a of the mobile telephone terminal 2, advertising information 4a is displayed with the search results 8g. | (S. 34) |

Figure 11

-Advertisements-

<table>
<tr><td colspan="2"><b>INTERNATIONAL SEARCH REPORT</b></td><td>International application No.<br>PCT/JP2007/071193</td></tr>
</table>

A. CLASSIFICATION OF SUBJECT MATTER
*G06Q30/00(2006.01)i, G06F17/30(2006.01)i, G06Q10/00(2006.01)i*

According to International Patent Classification (IPC) or to both national classification and IPC

B. FIELDS SEARCHED

Minimum documentation searched (classification system followed by classification symbols)
G06Q30/00, G06F17/30, G06Q10/00

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-319138 A (Kabushiki Kaisha Kosumoruto et al.),<br>16 November, 2001 (16.11.01),<br>Full text; Figs. 1 to 12<br>(Family: none) | 1-5,10,11<br>6-9 |
| Y | WO 2005/081155 A1 (Sachiteria Kabushiki Kaisha),<br>01 September, 2005 (01.09.05),<br>Full text; Figs. 1 to 28<br>(Family: none) | 6,7 |
| Y | JP 2004-199237 A (NEC Soft Kabushiki Kaisha),<br>15 July, 2004 (15.07.04),<br>Full text; Figs. 1 to 6<br>(Family: none) | 6,7 |

| ☒ | Further documents are listed in the continuation of Box C. | ☐ | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>30 November, 2007 (30.11.07) | Date of mailing of the international search report<br>18 December, 2007 (18.12.07) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/071193 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | WO 2003/038377 A  (Matsushita Electric Industrial Co., Ltd.), 08 May, 2003 (08.05.03), Full text; Figs. 1 to 23 (Family: none) | 8,9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003196509 A
- JP 2003501729 W
- JP 2005533327 W
- JP 2005537591 W
- JP 2006500699 W
- JP 2001306567 A
- JP 2003044552 A
- JP 2004310524 A